# FASCICULE DE BREVET EUROPEEN

(11) **EP 1 797 310 B1**
(45) Date de publication et mention de la délivrance du brevet: **15.07.2009**
(21) Numéro de dépôt: 05800618.0
(22) Date de dépôt: 28.09.2005
(51) Int. Cl.: F02K 1/48, F02K 1/38

(54) **MELANGEUR POUR TUYERE A FLUX SEPARES**
MISCHER FÜR EINE DÜSE MIT GETRENNTEM DURCHFLUSS
MIXER FOR SEPARATE-FLOW NOZZLE

(30) Priorité: 29.09.2004 FR 0410296
(43) Date de publication de la demande: 20.06.2007
(73) Titulaire: Snecma Propulsion Solide, 33187 Le Haillan Cedex (FR)
(72) Inventeur: CONETE, Eric, F-33700 MERIGNAC (FR); PHILIPPE, Eric, F-33700 MERIGNAC (FR); BAROUMES, Laurent, F-33000 BORDEAUX (FR)
(74) Mandataire: Desormiere, Pierre-Louis
(86) Numéro de dépôt international: PCT/FR2005/050790
(87) Numéro de publication internationale: WO 2006/035186

(56) Documents cités:
- FR-A- 2 597 157
- US-A- 4 907 743
- US-B1- 6 606 854

## Description

### Arrière-plan de l'invention

La présente invention se rapporte au domaine général des tuyères équipant les turboréacteurs d'avions. Elle vise plus particulièrement les tuyères à flux séparés équipées de mélangeurs de flux qui permettent de réduire le bruit émis par le jet en sortie de la tuyère tout en améliorant les performances du moteur.

Plus précisément, les tuyères à flux séparés de turboréacteurs se composent généralement d'une nacelle à flux confluant renfermant un capot primaire définissant un premier canal annulaire pour l'écoulement d'un flux primaire (ou flux chaud) issu de la chambre de combustion et un capot secondaire disposé concentriquement autour du capot primaire de façon à définir un second canal annulaire pour l'écoulement d'un flux secondaire (ou flux froid) provenant de la soufflante.

Afin de réduire le bruit de jet engendré en sortie d'une telle tuyère, il est connu d'utiliser des mélangeurs ayant une conception spécifique pour favoriser le mélange entre le flux primaire et le flux secondaire issus du turboréacteur. Une des conceptions les plus utilisées actuellement dans les turboréacteurs civils est celle du mélangeur à lobes. En effet, le mélangeur à lobes permet d'obtenir un cisaillement radial entre les flux primaire et secondaire afin de favoriser le mélange entre ces flux. Des exemples de réalisations de mélangeurs à lobes pour tuyères à flux séparés sont décrits notamment dans les documents EP 1 141 534, US 5 755 092, US 5 924 632 et FR 2 597 157.

Cependant, si un tel type de mélangeur permet d'améliorer le rendement et les performances acoustiques des turboréacteurs à tuyères à flux séparés, il entraîne inévitablement une augmentation de la masse de la tuyère avec un impact sur la dynamique d'ensemble du moteur et sur sa liaison avec le pylône avion. En effet, le mélangeur à lobes est traditionnellement réalisé en matériau métallique, typiquement en Inconel® 625. Il représente, par conséquent, une masse supplémentaire non négligeable en porte-à-faux dans le moteur qui entraîne une augmentation du chargement mécanique sur la bride du carter d'échappement de la tuyère, notamment lors de cas de charges limites ou extrêmes comme la perte d'aube ou les réponses à balourds. Cette masse supplémentaire engendre également une augmentation des efforts aux interfaces moteur/pylône.

### Objet et résumé de l'invention,

La présente invention a pour but de proposer une nouvelle conception de mélangeur à lobes pour tuyère à flux séparés qui permet de réduire les charges mécaniques engendrées par la présence d'une telle masse en sortie de tuyère.

Ce but est atteint du fait que, conformément à l'invention, le mélangeur est formé en deux parties, à savoir une virole de fixation pour raccorder le mélangeur au carter d'échappement de la tuyère et une structure à lobes destinée à mélanger les flux issus du turboréacteur, et que la structure à lobes est réalisée en matériau composite à matrice céramique et comprend des moyens pour former une liaison entre au moins une partie des lobes de la structure.

Ainsi, la majeure partie du mélangeur selon invention, à savoir la structure à lobes, est réalisée en un matériau composite à matrice céramique, ce qui permet de diminuer de façon significative la masse du mélangeur et, par conséquent, celle de la tuyère d'environ 30 à 50%.

En outre, la structure à lobes étant réalisée en matériau composite thermostructural, elle possède des bonnes propriétés mécaniques qu'elle conserve à température élevée.

La liaison réalisée entre les lobes permet de raidir et, par conséquent, de renforcer l'ensemble de la structure à lobes, ce qui lui confère une tenue mécanique au moins égale à celle des mélangeurs entièrement métalliques.

On entend par « matériau composite à matrice céramique (CMC) », les matériaux formés d'un renfort en fibres réfractaires (carbone ou céramique) densifiés par une matrice au moins partiellement céramique. De tels matériaux CMC sont notamment les composites C/SiC (renfort en fibres de carbone et matrice en carbure de silicium), les composites C/C-SiC (renfort en fibres de carbone et matrice comprenant une phase carbone, généralement au plus près des fibres, et une phase carbure de silicium), les composites SiC/SiC (fibres de renfort et matrice en carbure de silicium), et les composites oxyde/oxyde.

La structure à lobes peut être formée d'une seule pièce ou à partir d'une pluralité de secteurs assemblés entre eux, ce qui permet, dans certains cas, de faciliter la fabrication de la structure à lobes et de réduire les coûts de rechange.

Selon un aspect de l'invention, la structure à lobes comprend un anneau raidisseur qui est fixé au voisinage de l'extrémité de ses lobes internes. Cet anneau peut être en matériau métallique ou en matériau composite à matrice céramique. Il peut être fixé sur les lobes internes par des liaisons boulonnées, l'anneau comprenant alors des moyens de profilage pour intégrer chaque liaison de manière à limiter les pertes aérodynamiques et assurer la tenue de l'anneau vis-à-vis des charges de flambage.

Pour compenser les dilatations différentielles entre la virole de fixation du mélangeur en matériau métallique et la structure à lobes en matériau composite à matrice céramique, on utilise des pattes de fixation souples pour attacher la structure à lobes sur la virole de fixation.

De même, le capotage externe, recevant principalement un flux de contournement à des températures inférieures à celles reçues par la virole interne recevant principalement le flux de gaz chauds issus de la chambre de combustion du turboréacteur, peut être fixé à la virole interne par des pattes de fixation souples de manière à compenser les dilatations différentielles entres ces deux pièces.

La présente invention a également pour objet un turboréacteur dont la tuyère à flux séparés comporte un mélangeur tel que défini précédemment.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels:
- la figure 1 est une vue en perspective d'un mélangeur pour tuyère de turboréacteur selon un mode de réalisation de l'invention ;
- la figure 2 est une vue élargie d'une partie II du mélangeur de la figure 1 ;
- la figure 3 est une vue en section selon le plan de coupe III de la figure 2 ;
- la figure 4 est une vue de face selon le repère IV de la figure 1;
- la figure 5A est une vue en section suivant le plan de coupe A de la figure 4 ;
- la figure 5B est une vue en perspective d'une patte de fixation de la figure 5A ;
- la figure 6A est une vue en section suivant le plan de coupe B de la figure 4 ;
- la figure 6B est une vue en perspective d'une patte de fixation de la figure 6A ;
- la figure 7A est une vue en perspective d'une pluralité de secteurs utilisés pour former une structure à lobes conformément à un autre mode de réalisation de l'invention ;
- la figure 7B est une vue en perspective d'une structure à lobes obtenue après assemblage des secteurs de la figure 7A ;
- la figure 7C est une vue en section agrandie suivant le repère VIIC de la figure 7B.

### Description détaillée d'un mode de réalisation

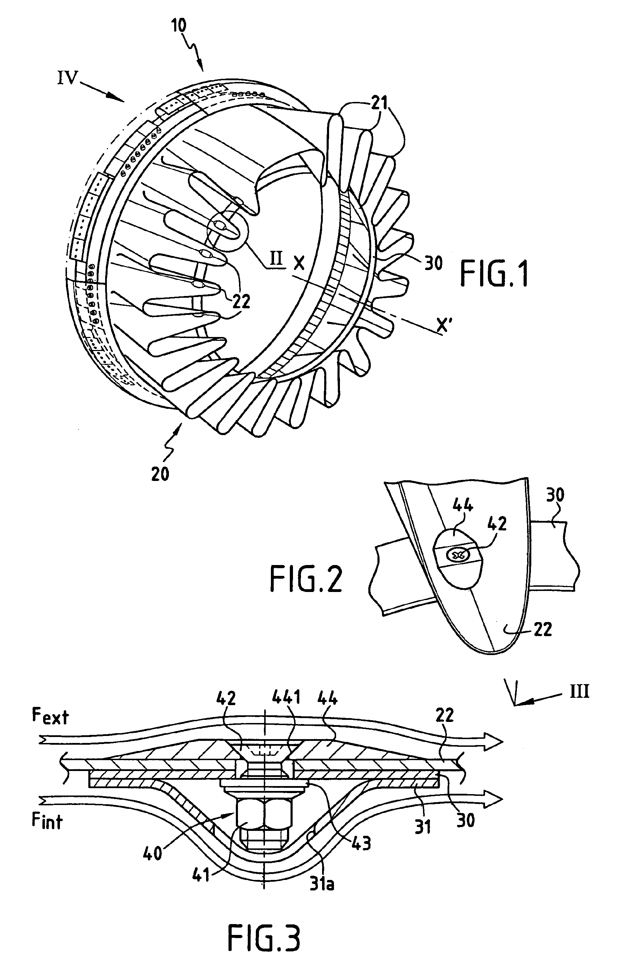

La figure 1 illustre un mélangeur pour tuyère à flux séparés de turbomachine conformément à un mode de réalisation de l'invention. Le mélangeur, qui s'étend suivant un axe longitudinal X-X', comprend, d'une part, une virole de fixation 10 en matériau métallique (ex. Inconel ® 625) destiné à raccorder le mélangeur au carter d'échappement d'une tuyère de turboréacteur (non représenté) et, d'autre part, une structure à lobes 20 à l'extrémité de laquelle se fait le mélange entre le flux gazeux interne issu de la chambre de combustion du turboréacteur (appelé aussi flux chaud ou flux primaire) circulant à l'intérieur du mélangeur et le flux externe provenant par exemple de la soufflante en amont (appelé aussi flux froid ou flux secondaire) circulant à l'extérieur du mélangeur.

Afin de limiter le bruit engendré à la confluence des deux flux en sortie du mélangeur, la structure 100 présente une série d'ondulations formant une pluralité de lobes externes 21 et internes 22 répartis de façon circonférentielle autour de l'axe longitudinal X-X' du mélangeur. De façon bien connue, l'utilisation d'une telle structure à lobes dans une tuyère à mélangeur flux primaire/flux secondaire permet de contrôler le mélange entre les deux flux de manière à améliorer les performances du turboréacteur et réduire le bruit émis par ce dernier.

Conformément la présente invention, la structure à lobes 20, qui est traditionnellement en matériau métallique, typiquement de l'Inconel® 625, est ici réalisée en matériau composite à matrice céramique (CMC), c'est-à-dire un matériau formé d'un renfort en fibres réfractaires (carbone ou céramique) densifié par une matrice au moins partiellement céramique.

Pour fabriquer la structure à lobes de la présente invention, on réalise une préforme fibreuse en fibres réfractaires (carbone ou céramique) ayant sensiblement la forme de la structure à lobes à réaliser. Cette préforme est ensuite densifiée, de façon bien connue, par voie liquide et/ou gazeuse.

La densification par voie liquide consiste à imprégner la préforme par une composition liquide contenant un précurseur du matériau de la matrice. Le précurseur se présente habituellement sous forme d'un polymère, tel qu'une résine, éventuellement dilué dans un solvant. La transformation du précurseur en céramique est réalisée par traitement thermique, après élimination du solvant éventuel et réticulation du polymère. Plusieurs cycles d'imprégnation successifs peuvent être réalisés pour parvenir au degré de densification souhaité. A titre d'exemple, des précurseurs liquides de carbone peuvent être des résines à taux de coke relativement élevé, telles que des résines phénoliques, tandis que des précurseurs liquides de céramique, notamment de SiC, peuvent être des résines de type polycarbosilane (PCS) ou polytitanocarbosilane (PTCS).

Le procédé par voie gazeuse consiste dans l'infiltration chimique en phase vapeur. La préforme fibreuse correspondant à la structure à réaliser est placée dans un four dans lequel est admise une phase gazeuse réactionnelle. La pression et la température régnant dans le four et la composition de la phase gazeuse sont choisies de manière à permettre la diffusion de la phase gazeuse au sein de la porosité de la préforme pour y former la matrice par dépôt, au contact des fibres, d'un matériau solide résultant d'une décomposition d'un constituant de la phase gazeuse ou d'une réaction entre plusieurs constituants. A titre d'exemple, des précurseurs gazeux du carbone peuvent être des hydrocarbures tels que méthane et/ou propane donnant le carbone par craquage, et un précurseur gazeux de céramique, notamment de SiC, peut être du méthyltrichlorosilane (MTS) donnant du SiC par décomposition du MTS.

Il existe également des procédés mixtes comprenant à la fois des voies liquides et des voies gazeuses.

La structure à lobes de selon l'invention peut être réalisée en un des matériaux composites à matrice céramique (CMC) suivants : composite C/SiC (renfort en fibres de carbone et matrice en carbure de silicium), composite C/C-SiC (renfort en fibres de carbone et matrice comprenant une phase carbone, généralement au plus près des fibres, et une phase carbure de silicium), composite SiC/SiC (fibres de renfort et matrice en carbure de silicium), et composite oxyde/oxyde.

La structure selon l'invention peut être formée directement d'une seule pièce. Toutefois, la structure à lobes peut être aussi formée à partir d'une pluralité de secteurs assemblés entre eux, ce qui peut être avantageux dans certains cas notamment en raison de la forme complexe de la structure à réaliser.

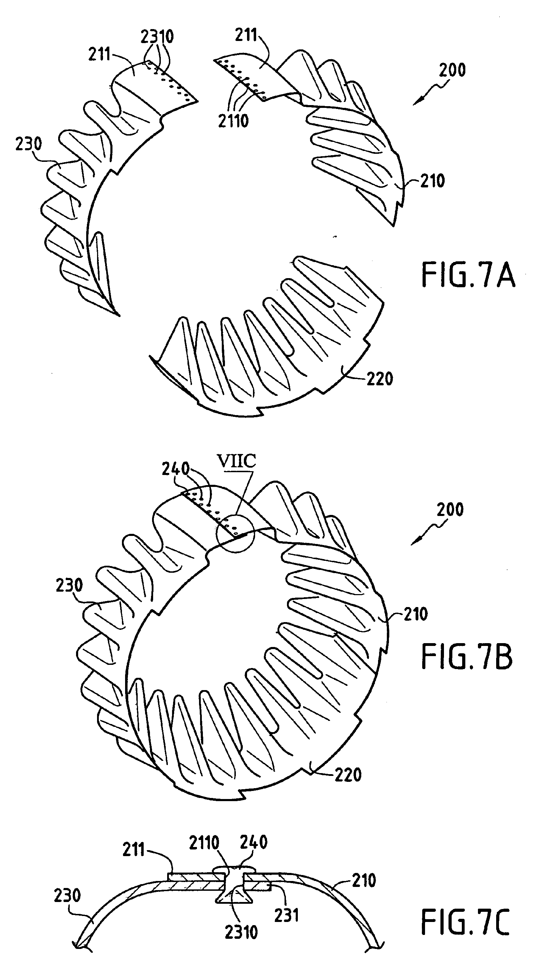

Un mode de réalisation d'une structure à lobes sectorisée est illustré sur les figures 7A à 7C. Comme illustré sur la figure 7A, une structure à lobes 210 est réalisée par assemblage de trois secteurs 210, 220, 230 fabriqués en matériau composite à matrice céramique suivant un des procédés de fabrication décrit ci-dessus. Chaque secteur est réalisé séparément (i.e. réalisation de la réforme fibreuse et densification), ce qui permet une plus grande souplesse dans la fabrication ainsi que dans la maintenance. En effet, lors de la fabrication, il est possible de définir une taille de secteur adaptée aux capacités des moyens de production. Par exemple, la taille des secteurs peut être définie en fonction de la capacité de chargement des fours utilisés pour les traitements thermiques lors de la densification, ces derniers ayant typiquement un diamètre de 1000 mm. En outre, suivant le type de tissu utilisé pour le renfort fibreux, il peut être intéressant de diviser la préforme fibreuse en secteurs de dimensions adaptées à la géométrie de texture du tissu utilisé. Par ailleurs, en cas de problème (i.e. détérioration, choc, usure...) lors de la fabrication ou de l'utilisation en service de la structure à lobes, on ne remplace que le ou les secteurs touchés.

Une fois réalisés, les secteurs sont reliés par leurs extrémités de manière à former une structure à lobes unitaire 200 telle qu'illustrée sur la figure 7B. Selon un mode de réalisation, les secteurs peuvent être assemblés les uns avec les autres au moyen de liaisons rivetées. Comme illustré sur la figure 7C, on superpose les extrémités 211 et 231 respectivement de deux secteurs adjacents 210 et 230, chaque extrémité 211, respectivement 231, comportant une pluralité d'orifices 2110, respectivement 2310, qui coopèrent entre eux une fois les deux extrémités superposées. On pose ensuite dans chaque passage formé par deux orifices 2110 et 2310 en coopération un rivet 240 qui assure le maintien entre les secteurs. D'autres moyens de fixation (ex. liaisons boulonnées, brasage,...) peuvent bien évidemment être utilisés pour assembler les secteurs entre eux.

L'utilisation de matériau composite à matrice céramique pour la structure à lobes du mélangeur conformément à l'invention permet de diminuer la masse d'une tuyère de façon significative en comparaison avec une tuyère conventionnelle équipée d'un mélangeur entièrement métallique. En effet, l'utilisation d'une structure à lobes en matériau composite à matrice céramique plutôt qu'en métal permet de diminuer la masse de la tuyère de 30 à 50%. En outre, les matériaux composites à matrice céramique sont connus pour leurs bonnes propriétés mécaniques et leur capacité à conserver ces propriétés à température élevée. Par conséquent, la structure à lobes selon l'invention est constituée d'un matériau particulièrement bien adapté pour supporter les températures des flux générés en amont dans la turbomachine et en particulier celles des gaz chauds issus de la chambre de combustion (flux primaire).

Toutefois, afin d'augmenter ici la capacité mécanique et la rigidité de la structure à lobes en matériau composite à matrice céramique, la structure comprend en outre des moyens raidisseurs. Selon un mode de réalisation illustré sur la figure 1, un anneau raidisseur 30 est fixé au voisinage de chaque extrémité des lobes internes 22 de la structure 20. Ainsi, la structure à lobes 20 présente une résistance mécanique accrue vis-à-vis des charges générées par l'écoulement des flux issus du turboréacteur. Plus précisément, puisque chaque extrémité des lobes internes est solidaire de l'anneau, la structure à lobes ne peut être déformée par l'écoulement d'un flux qu'il soit interne ou externe. L'anneau 30 peut être en matériau métallique ou en matériau composite à matrice céramique. Selon une variante de l'invention, le cône d'échappement du moteur peut être utilisé à la place de l'anneau 30 comme moyen de raidissement de la structure à lobes. Dans ce cas, les lobes internes de la structure prennent directement appui sur le cône d'échappement qui joue le rôle de raidisseur.

Chaque lobe interne est fixé à l'anneau par l'intermédiaire d'une liaison boulonnée 40. Afin de garantir une bonne tenue de l'anneau vis-à-vis des charges de flambage et de limiter les pertes aérodynamiques, les liaisons boulonnées sont intégrées dans des éléments de profilage. Plus précisément, telle qu'illustré sur les figures 2 et 3, on utilise une cale 44 sur la partie supérieure du lobe qui est profilée de manière à limiter les perturbations sur l'écoulement du flux externe Fₑₓₜ. La cale 44 comporte un embrèvement 441 pour recevoir la tête de la vis 42 de la liaison 40. Comme illustré sur la figure 3, on évite ainsi à la vis 42 d'être en saillie sur la partie supérieure du lobe 22. De même, du côté inférieur du lobe 22 qui repose sur l'anneau 30, la liaison boulonnée 40 est intégrée dans un caisson profilé 31 fixé sur l'anneau 30. Le caisson 31 présente une forme aérodynamique pour limiter au maximum l'influence de la liaison 40 sur l'écoulement du flux interne Fᵢₙₜ. Le caisson 31 comporte une ouverture 31a qui permet le passage d'un outil de serrage autour de l'écrou 41 de la liaison 40. Ce caisson contribue à la bonne tenue de l'anneau aux charges de flambage.

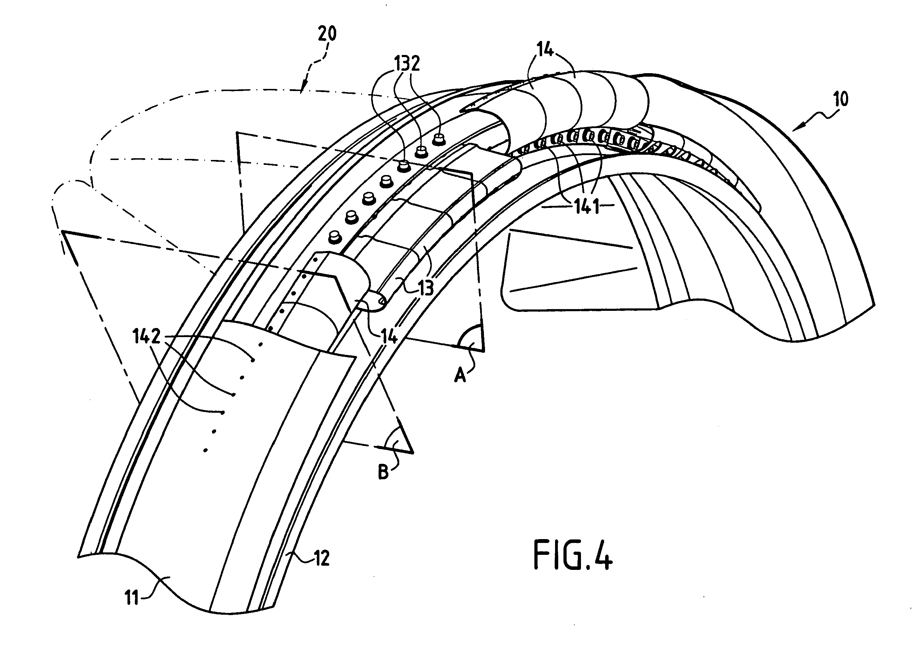

On se réfère maintenant à la figure 4 qui montre, conformément à un mode de réalisation d'un mélangeur selon l'invention, les dispositifs de liaison utilisés pour fixer, d'une part, la structure à lobes 20 à la virole de fixation 10 et, d'autre part, le capotage externe 11 à la virole interne 12.

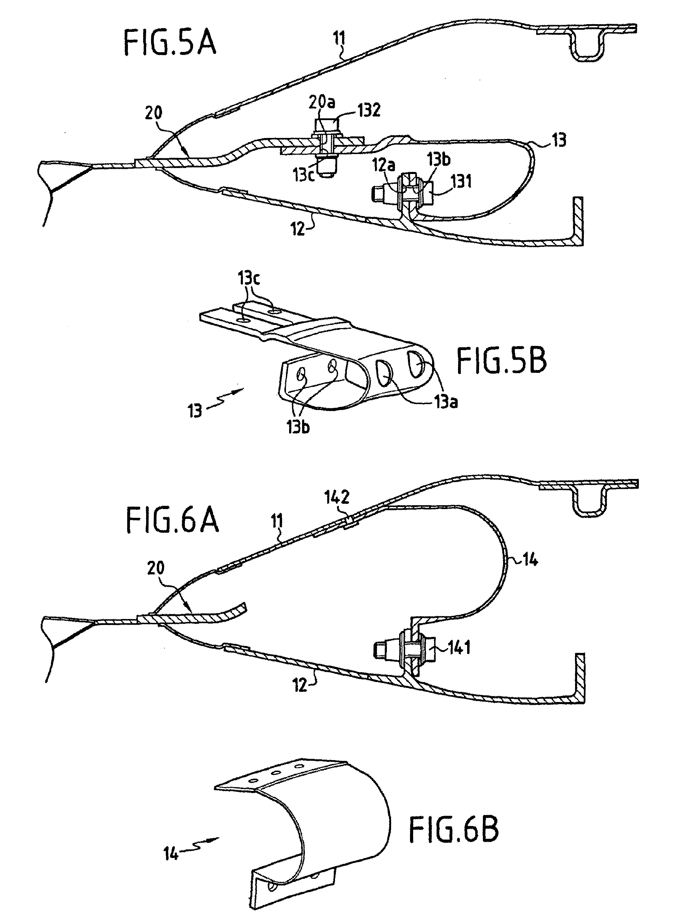

Une des spécificités du matériau composite à matrice céramique avec lequel est constitué la structure à lobes 20 est d'avoir un faible coefficient de dilatation thermique par rapport au matériau métallique dont est constitué les autres pièces du mélangeur comme en particulier la virole interne 12 sur laquelle la structure à lobes 20 est attachée. Ces pièces sont soumises à des montées en températures importantes générées par les gaz de combustion du moteur. Aussi, pour compenser les dilatations différentielles entre la structure à lobes en matériau composite à matrice céramique et la virole interne 12 en matériau métallique, on utilise des pattes de fixation métalliques souples 13 pour compenser ces écarts de dilatation et limiter le chargement mécanique induit sur la structure à lobes. Tel qu'illustré sur les figures 5A et 5B, la partie supérieure des pattes 13 comportent des orifices 13c qui coopèrent avec des orifices 20a de la structure à lobes pour le passage de liaisons boulonnées 132. La partie inférieure des pattes 13 comporte des orifices 13b qui coopèrent avec des orifices 12a de la virole interne 12, des liaisons boulonnées 131 assurant la fixation entre ces deux pièces. Les pattes souples 13 comportent en outre des ouvertures 13a pour le passage des clés de serrage de la boulonnerie.

De même, pour la reprise des dilatations différentielles entre le capotage externe 11 et la virole interne 12 qui reçoivent respectivement des flux (flux primaire et secondaire) à des températures différentes, on utilise des pattes de fixation métalliques souples 14 qui sont fixées, d'une part, à la virole interne 12 par des liaisons boulonnées 141 et, d'autre part, au capotage externe 11 par des rivets 142 (figures 6A et 6B).

Ainsi, grâce à la conception du mélangeur selon l'invention, il est possible de réduire la masse en porte-à-faux, ce qui limite potentiellement le chargement mécanique sur la bride du carter d'échappement de la tuyère en cas de charges importantes engendrées par exemple par la perte d'une aube ou par un balourd. De par sa masse allégée, le mélangeur de l'invention permet également de réduire les efforts aux interfaces moteur/pylône.

## Revendications

1. Mélangeur pour tuyère à flux séparés de turboréacteur comprenant, suivant un axe longitudinal (X-X'), une virole de fixation (10) pour raccorder ledit mélangeur au carter d'échappement de la tuyère et une structure à lobes (20) destinée à mélanger les flux issus du turboréacteur, ladite structure présentant une succession de lobes internes (22) et externes (21) répartis de façon circonférentielle autour de l'axe longitudinal (X-X') du mélangeur,
**caractérisé en ce que** la structure à lobes (20) est réalisée en matériau composite à matrice céramique et **en ce qu'**elle comprend en outre des moyens raidisseurs pour former une liaison entre les lobes internes (22) de la structure à lobes empêchant la déformation de ladite structure par l'écoulement des flux issus du turboréacteur.

2. Mélangeur selon la revendication 1, **caractérisé en ce que** la structure à lobes (20) est formée en un matériau composite à matrice céramique choisi parmi les matériaux composites C/SiC, C/C-SiC, SiC/SiC et oxyde/oxyde.

3. Mélangeur selon la revendication 1 ou 2, **caractérisé en ce qu'**il comprend un anneau raidisseur (30) fixé au voisinage de l'extrémité des lobes internes (22) de la structure à lobes (20).

4. Mélangeur selon la revendication 3, **caractérisé en que** l'anneau raidisseur (30) est en matériau métallique ou en matériau composite à matrice céramique.

5. Mélangeur selon la revendication 3 ou 4, **caractérisé en ce que** l'anneau raidisseur (30) est fixé sur les lobes internes (22) par des liaisons boulonnées (40), l'anneau comprenant en outre des moyens de profilage pour intégrer chaque liaison (40) de manière à limiter les pertes aérodynamiques et assurer la tenue de l'anneau vis-à-vis des charges de flambage.

6. Mélangeur selon la revendication 5, **caractérisé en ce que** l'anneau raidisseur (30) comprend un caisson profilé (31) pour intégrer la partie des liaisons boulonnées (40) en saillie à l'intérieur de l'anneau raidisseur.

7. Mélangeur selon la revendication 5 ou 6, **caractérisé en ce que** les liaisons boulonnées (40) comprennent chacune une cale profilée (44) disposée sur les lobes internes (22) pour intégrer la partie (42) des liaisons boulonnées en saillie sur les lobes internes.

8. Mélangeur selon l'une quelconque des revendications 1 à 7, **caractérisé en ce que** la structure à lobes (200) est formée d'une pluralité de secteurs (210, 220, 230) assemblés entre eux.

9. Mélangeur selon l'une quelconque des revendications 1 à 7, **caractérisé en ce que** la structure à lobes est formée d'une seule pièce.

10. Mélangeur selon l'une quelconque des revendications 1 à 9, **caractérisé en ce que** la virole de fixation (10) du mélangeur est en matériau métallique et **en ce que** la structure à lobes (20) en matériau composite à matrice céramique est attachée audit anneau de fixation via des pattes de fixation souples (13) de manière à compenser les dilatations différentielles entre l'anneau de fixation et la structure à lobes.

11. Mélangeur selon l'une quelconque des revendications 1 à 10, **caractérisé en ce que** la virole de fixation (10) comprend une virole interne (12) recevant principalement le flux de gaz chauds issus de la chambre de combustion du turboréacteur et un capotage externe (11) recevant principalement un flux de contournement de température inférieure, ledit capotage externe étant attaché à la virole interne via des pattes de fixation souples (14) de manière à compenser les dilatations différentielles entres ces deux pièces.

12. Turboréacteur comprenant une tuyère à flux séparés, **caractérisé en ce que** la tuyère est équipée d'un mélangeur selon l'une quelconque des revendications 1 à 11.

## Claims

1. A mixer for a separate-stream turbojet nozzle, the mixer comprising along a longitudinal axis (X-X') both a fastener shroud (10) for connecting said mixer to the exhaust casing of the nozzle, and a lobe structure (20) for mixing the streams coming from the turbojet, said structure presenting a succession of inner and outer lobes (22 and 21) distributed circumferentially around the longitudinal axis (X-X') of the mixer, the mixer being **characterized in that** the lobe structure (20) is made of a ceramic matrix composite material and **in that** it further comprises stiffening means for forming connections between inner lobes (22) of the lobe structure thereby preventing said lobe structure from deforming by the flow of the streams coming from the turbojet.

2. A mixer according to claim 1, **characterized in that** the lobe structure (20) is made of a ceramic matrix composite material selected from the following composite materials: C/SiC; C/C-SiC; SiC/SiC; and oxide/oxide.

3. A mixer according to claim 1 or claim 2, **characterized in that** it includes a stiffener ring (30) fastened in the vicinity of the ends of the inner lobes (22) of the lobe structure (20).

4. A mixer according to claim 3, **characterized in that** the stiffener ring (30) is made of metal material or of ceramic matrix composite material.

5. A mixer according to claim 3 or claim 4, **characterized in that** the stiffener ring (30) is fastened to the inner lobes (22) by bolted connections (40), the ring further comprising streamlining means for integrating each connection (40) in such a manner as to limit aerodynamic losses and for providing the ring with strength against buckling loads.

6. A mixer according to claim 5, **characterized in that** the stiffener ring (30) comprises respective streamlined fairings (31) for integrating the portion of each bolted connection (40) that projects inside the stiffener ring.

7. A mixer according to claim 5 or claim 6, **characterized in that** each bolted connection (40) includes a streamlined spacer (44) disposed on the inner lobes (22) to integrate the portions (44) of the bolted connections that project from the inner lobes.

8. A mixer according to any one of claims 1 to 7, **characterized in that** the lobe structure (200) is made up of a plurality of assembled-together sectors (210, 220, 230).

9. A mixer according to any one of claims 1 to 7, **characterized in that** the lobe structure is made as a single piece.

10. A mixer according to any one of claims 1 to 9, **characterized in that** the fastener shroud (10) of the mixer is made of a metal material and **in that** the lobe structure (20) is made of a ceramic matrix composite material and is attached to said fastener ring via flexible fastener tabs (13) in such a manner as to compensate for differential expansion between the fastener ring and the lobe structure.

11. A mixer according to any one of claims 1 to 10, **characterized in that** the fastener shroud (10) comprises an inner shroud (12) mainly receiving the stream of hot gas coming from the combustion chamber of the turbojet, and an outer cover (11) mainly receiving a bypass stream, said outer cover being attached into the inner shroud via flexible fastener tabs (14) in order to compensate for differential expansion between those two parts.

12. A turbojet having a separate-stream nozzle, the turbojet being **characterized in that** the nozzle is fitted with a mixer according to any one of claims 1 to 11.

## Patentansprüche

1. Mischer für eine Düse mit getrenntem Durchfluß eines Turbostrahltriebwerks, der entlang einer Längsachse (X-X') eine Befestigungshülse (10), um den Mischer an das Austrittsgehäuse der Düse anzuschließen und eine Lappenstruktur (20) umfaßt, die dazu dient, die Flüsse zu mischen, die aus dem Turbostrahltriebwerk kommen, wobei die Struktur eine Abfolge von inneren (22) und äußeren Lappen (21) aufweist, die umlaufend um die Längsachse (X-X') des Mischers herum verteilt sind,
**dadurch gekennzeichnet, daß** die Lappenstruktur (20) in einem Keramikmatrix-Verbundwerkstoff ausgeführt ist und dadurch, daß sie ferner Versteifungsmittel umfaßt, um eine Verbindung zwischen den inneren Lappen (22) der Lappenstruktur zu bilden, wodurch die Verformung der Struktur durch das Herausströmen des Flüsse, die aus dem Turboluftstrahltriebwerk kommen, verhindert wird.

2. Mischer nach Anspruch 1, **dadurch gekennzeichnet, daß** die Lappenstruktur (20) aus einem Keramikmatrix-Verbundwerkstoff, ausgewählt aus den C/SiC-, C/C-SiC-, SiC/SiC- und Oxid/Oxid-Verbundwerkstoffen, gebildet ist.

3. Mischer nach Anspruch 1 oder 2, **dadurch gekennzeichnet, daß** er einen Versteifungsring (30) umfaßt, der nahe dem Ende der inneren Lappen (22) der Lappenstruktur (20) befestigt ist.

4. Mischer nach Anspruch 3, **dadurch gekennzeichnet, daß** der Versteifungsring (30) aus einem metallischen Werkstoff oder einem Keramikmatrix-Verbundwerkstoff besteht.

5. Mischer nach Anspruch 3 oder 4, **dadurch gekennzeichnet, daß** der Versteifungsring (30) auf den inneren Lappen (22) durch Schraubenverbindungen (40) befestigt ist, wobei der Ring ferner aerodynamisch geformte Verkleidungsmittel umfaßt, um jede Verbindung (40) so zu integrieren, daß die aerodynamischen Verluste begrenzt werden und um die Beständigkeit des Rings gegenüber Knicklast zu gewährleisten.

6. Mischer nach Anspruch 5, **dadurch gekennzeichnet, daß** der Versteifungsring (30) einen aerodynamisch geformten Behälter (31) umfaßt, um den Teil der Schraubenverbindungen (40), die ins Innere des Versteifungsrings hineinragen, zu integrieren.

7. Mischer nach Anspruch 5 oder 6, **dadurch gekennzeichnet, daß** die Schraubverbindungen (40) jeweils ein aerodynamisch geformtes Paßstück (44) umfassen, das auf den inneren Lappen (22) angeordnet ist, um den Teil (42) der Schraubverbindungen, der auf die inneren Lappen hineinragt, zu integrieren.

8. Mischer nach einem der Ansprüche 1 bis 7, **dadurch gekennzeichnet, daß** die Lappenstruktur (200) aus mehreren Sektoren (210, 220, 230) gebildet ist, die aneinander montiert sind.

9. Mischer nach einem der Ansprüche 1 bis 7, **dadurch gekennzeichnet, daß** die Lappenstruktur aus einem einzigen Stück gebildet ist.

10. Mischer nach einem der Ansprüche 1 bis 9, **dadurch gekennzeichnet, daß** die Befestigungshülse (10) des Mischers aus einem metallischen Werkstoff ist, und dadurch, daß die Lappenstruktur (20) aus einem Keramikmatrix-Verbundwerkstoff an dem Befestigungsring über flexible Befestigungskrallen (13) befestigt besteht, um die unterschiedlichen Ausdehnungen zwischen dem Befestigungsring und der Lappenstruktur zu kompensieren.

11. Mischer nach einem der Ansprüche 1 bis 10, **dadurch gekennzeichnet, daß** die Befestigungshülse (10) eine Innenhülse (12) umfaßt, die im wesentlichen den Fluß der heißen Gase aufnimmt, die aus der Verbrennungskammer des Turbostrahltriebwerks kommen und eine Außenabdeckung (11), die im Wesentlichen einen Umleitungsfluß mit niedrigerer Temperatur aufnimmt, wobei die Außenabdeckung an der Innenhülse über flexible Befestigungskrallen (14) befestigt ist, um die unterschiedlichen Ausdehnungen zwischen diesen beiden Teilen zu kompensieren.

12. Turbostrahltriebwerk, das eine Düse mit getrenntem Durchfluß umfaßt, **dadurch gekennzeichnet, daß** die Düse mit einem Mischer nach einem der Ansprüche 1 bis 11 ausgestattet ist.
